# EUROPEAN PATENT APPLICATION

(11) **EP 1 330 078 A1**
(43) Date of publication of application: **23.07.2003**
(21) Application number: 02250295.9
(22) Date of filing: 16.01.2002
(51) Int. Cl.: H04L 12/46, H04L 29/14

(54) **Spanning tree method**

(71) Applicant: LUCENT TECHNOLOGIES INC., Murray Hill, New Jersey 07974-0636 (US)
(72) Inventor: Van Foreest, Nicky, 7551 DB Hengelo, Twente (NL); Malhotra, Richa, 7511 DG Enschede.Twente. (NL)
(74) Representative: Sarup, David Alexander

(57) **Abstract**

Method for determining a spanning tree topology, comprising the steps of detecting network failure, resolving update of topology, the flushing of a MAC table in a network component (B1, B2) in reaction of detection of network failure, and the detection of the network failure comprises receiving by the network component of an error detection message from the physical layer of the network and a data communication network component, in particular a bridge, provided with means for flushing a MAC table or data buffer of the network component in reaction of detection of network failure.

## Description

The invention relates to a method for determining a spanning tree topology according to the preamble of claim 1.

To prevent broadcast storms and other unwanted side effects of loops in computer network configurations, the Spanning Tree Protocol (STP) is used. STP provides switches with information to avoid loops, by sensing that a switch has more than one way to communicate with a node, determining which way is best to forward data and blocking out the other path(s). Track is kept of other possible ways of forwarding, so that in case the primary way of forwarding is not available for some reason, an other forwarding option can be selected.

In a network for example with links formed of the SDH/SONET type, a typical implementation for STP is as follows. Each switch is assigned a group of identities (IDs), one for the switch itself and one for each port on the switch. The switch's identifier, called the Bridge ID (BID) contains a bridge priority along with one of the switch's MAC (Media Access Code) addresses. Each Port ID has a priority setting and a port number.

A path cost value is assigned to each port. The cost is typically based on a guideline established as part of the IEEE standard 802.1d, or can be assigned by the system manager. Generally, lower values are given to paths with a larger bandwidth.

In the initiation process every switch considers itself initially the Root Bridge. From this starting point, messages are exchanged between the switches to determine a single Root Bridge, and which ports each switch should use. This information is shared between all the switches by way of special network frames, called Bridge Protocol Data Units (BPDU). A BPDU comprises the following parameters:
- Root BID - This is the BID of the current Root Bridge.
- Path Cost to Root Bridge - indicating how far away the Root Bridge is.
- Sender BID - The BID of the switch that sends the BPDU.
- Port ID - The actual port on the switch that this BPDU was sent from.

A Root Bridge is chosen based on the results of the BPDU exchange process between the switches. When a switch first powers up on the network, it sends out a BPDU with its own BID as the Root BID. When the other switches receive the BPDU, they compare the BID to the one they already have stored as the Root BID. If the new Root BID has a lower value, they replace the saved one. But if the saved Root BID is lower, a BPDU is sent to the new switch with this BID as the Root BID. When the new switch receives the BPDU, it realises that it is not the Root Bridge and replaces the Root BID in its table with the one it just received. The result is that the switch that has the lowest BID is elected by the other switches as the Root Bridge.

Based on the location of the Root Bridge, the other switches determine which of their ports has the lowest path cost to the Root Bridge. These ports are called Root Ports, and each switch (other than the current Root Bridge) must have one.

In use, that is under normal, stable operating conditions with no failures, all of the switches of the network are constantly sending BPDUs to each other. By doing this, switches can find out whether the information they have is still correct and whether further failures or changes in the network have occurred. When a switch receives a BPDU (from another switch) that is better than the one it is broadcasting for the same segment, it will stop broadcasting its BPDU out that segment. It will, instead, store the other switch's BPDU for reference and for broadcasting out to inferior segments, such as those that are farther away from the root bridge.

The switches determine who will have Designated Ports. A Designated Port is the connection used to send and receive packets on a specific segment. By having only one Designated Port per segment, no problems with loops can occur.

Designated Ports are selected based on the lowest path cost to the Root Bridge for a segment. Since the Root Bridge will have a path cost of zero, any ports on it that are connected to segments will become Designated Ports. For the other switches, the path cost is compared for a given segment. If one port is determined to have a lower path cost, it becomes the Designated Port for that segment. If two or more ports have the same path cost, then the switch with the lowest BID is chosen.

Once the Designated Port for a network segment has been chosen, any other ports that connect to that segment become non-Designated Ports. They block network traffic from taking that path so that it can only access that segment through the Designated Port.

Each switch has a table of BPDUs that it continually updates as mentioned above. The network is thereby configured as a single spanning tree, with the Root Bridge as the trunk and all other switches in the network as branches. Each switch communicates with the Root Bridge through the Root Ports, and with each segment through the Designated Ports, thereby maintaining a loop-free network. A Max Age timer is associated with the BPDU, which is the length of time that BPDU information is kept.

In the event that the Root Bridge fails or other network problems occur, such as a failure of a bridge or link, the switches concerned detect the failure. The failure is detected when a bridge stops receiving BPDUs on its Root Port, indicating a possible link or device failure, whereby the corresponding Max Age timer will expire. Consequently, the corresponding timed out information will be discarded from its tables. In response, the bridge will select a new Root Port based upon the next best information, and start transmitting BPDUs through its other ports.

As BPDU information is timed-out, the Spanning Tree is recalculated and ports may transition from the blocked state to the forwarding state and vice versa. Recalculation can also occur when a bridge with an ID superior to the root bridge enters the network. As a result of new BPDU information, a previously blocked port may learn that it is now the Root Port or the designated port for a given segment. Rather than transition directly from the blocked state to the forwarding state, ports transition through two intermediate states: a listening state and a learning state. The bridge will remain in each state for a pre-set period of time, called the forwarding delay. In the listening state, a port waits for information indicating that it should return to the blocked state. If, by the end of the forwarding delay time, no such information is received, the port transitions to the learning state. In the learning state, a port still blocks the receiving and forwarding of frames, but received frames are examined and the corresponding location information is stored, as described above. At the end of a second forwarding delay time, the port transitions from the learning state to the forwarding state, thereby allowing frames to be forwarded at the port.

As ports transition between the blocked and forwarding states, end-station MAC addresses may appear to move from one port to another. To prevent switches from distributing messages based upon incorrect information, switches quickly age-out and discard the "old" information in their filtering databases. More specifically, upon detection of a change in the Spanning Tree, switches transmit Topology Change Notification Protocol Data Unit (TCN-PDU) frames toward the root. The TCN-PDU is propagated hop-by-hop until it reaches the root which confirms receipt of the TCN-PDU by setting a Topology Change Flag; additionally a TC flag can be set in BPDUs subsequently transmitted by the root for a period of time. Other switches, receiving these BPDUs, note that the Topology Change Flag has been set, thereby alerting them to the change in the active topology. In response, switches significantly lower the ageing time associated with their filtering databases which, as described above, contain destination information corresponding to the entities within the network. Specifically, switches replace the default ageing time of five minutes with the forwarding delay time, which is generally fifteen seconds. Information contained in the filtering databases is thus quickly discarded.

Although the Spanning Tree Algorithm is able to maintain a loop-free tree despite network changes or link/bridge failure, recalculation of the Spanning Tree is a relatively time consuming process. Standard Spanning Tree values for the maximum age of BPDUs (which is the length of time that BPDU information is kept) is typically twenty seconds. The forwarding delay time (which is the length of time that ports are to remain in each of the listening and learning states) is fifteen seconds. As a result, recalculation of the Spanning Tree following a network change takes approximately fifty seconds: twenty seconds for BPDU information to time out, fifteen seconds in the listening state and another fifteen seconds in the learning state.

The object of the invention is to provide a method for resolving a new topology for a spanning tree that can be executed quickly after detection of a failure. An other objective of the invention is to detect failures in the network more quickly, in particular link failures.

To meet this objective, a method according to claim 1 is provided.

In the method according to the invention, the MAC tables, and the buffers of affected bridges are flushed directly after detection of a failure. This has as result that the resolving process can start directly from the initial state, thereby circumventing the lengthy process of repeated evaluation of various BPDUs and TCN-BPDUs, and the associated updating of tables to end up with a fully resolved topology.

The detection of a failure can be made by the timing out of a Max Age timer, however, by detecting the failure of a link by observation of an error message from the physical layer, the resolving process can be started without losing time waiting for the expiry of a Max Age timer.

The invention further relates to a data communication network component and a data communication network.

Particularly advantageous elaborations of the invention are set forth in the dependent claims. Further objects, modifications, effects and details of the invention appear from the following description, in which reference is made to the drawings, in which
fig. 1 shows a flow chart for the failure resolving process, and
fig. 2 shows a section of a network according to the invention.

In general the failure detection and resolving process under the STP protocol is as follows. Step 100 indicates the normal operation. If a failure occurs in the network the failure will be detected in some way in step 200, the failure detection. Subsequently, a topology update will be set into action (step 300) and in a further step 400, the topology will be resolved by BPDU propagation.

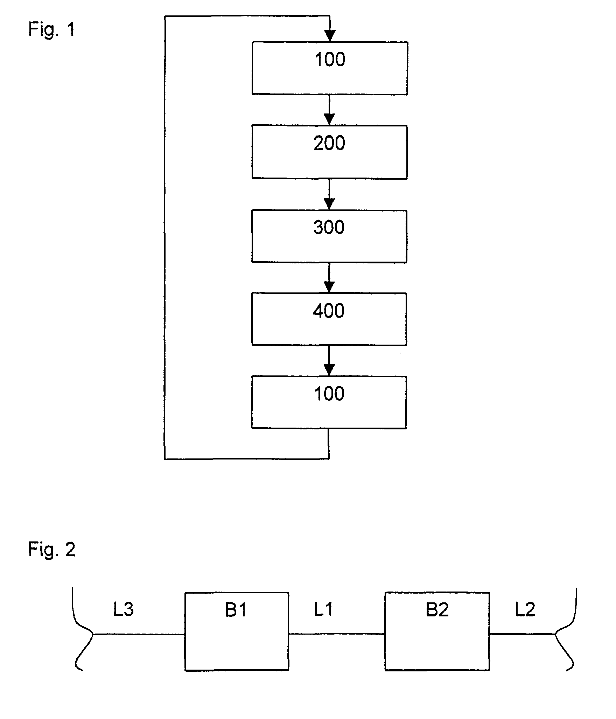

A network according an example of the invention encompasses at least two bridges B1 and B2 that are connected by a link L1, as shown in fig. 2. The bridges B1 and B2 are further connected to the network over respective links L3 and L2. Preferably, the link L1 is implemented as a SDH or SONET link, which has the characteristic that the physical layer is intelligent.

If during normal operation one of the bridges B1 or B2 fails, the other bridge will notice the failure when the Max Age timer times out. According to the invention, on expiry of the Max Age timer, the respective bridge flushes its MAC table and flush any data frames in its buffer. Optionally, a special message is composed by the bridge and send to at least the neighbours in the spanning tree to inform them about the failure so they as well can clear their MAC table and buffer if they haven't timed out already. This special message (hereinafter referred to as "X BPDU") can be made in the form of a BPDU, with its "message type field" set to a different value compared to a Configuration BPDU or a TCN BPDU, or a regular BPDU with its age set to a higher value than the Max Age, or any other feature that makes the message distinctive. According to the invention, each bridge is provided with means to detect a X BPDU and in response to the detection of a X BPDU flush the MAC table and buffer, and propagate the X BPDU further on to the neighbouring switches. This means can for example be implemented in software code sections.

After the flushing of the MAC table and data frames, the standard build up of the Spanning Tree (400) takes place. As mentioned before, in step 400 each bridge assumes to be the root and sends out BPDUs. In the end, the unique root, designated bridges and ports are chosen and the topology is resolved so that normal operation can resume.

By flushing the MAC table and data frames, the process of resolution of the new topology is significantly speeded up as there is no need to wait for the frames and tables advertising the previous topology to die out as is the case under the standard STP.

The invention further provides for a detecting mechanism for link failure. In case the link in the network is implemented as for example a SDH or SONET link, the physical layer of the link connection is able to monitor the state and condition of the link. Furthermore, in case of a link failure, the physical layer is able to compose an error message, which message is sent to the respective bridge or bridges. Furthermore, in case of link failure, the physical layer is able to compose and send an error message to the respective (directly affected) bridge or bridges. An example of such a message can be a "SDH trial signal fail" as will be generated in a SDH environment. Other implementations for the network will have comparable physical layer error messages indicating link failure. Dependent on the implementation, other lower protocol layers can equally provide for link failure messages.

According to the invention, the bridges operating the link are provided with detection means for detecting such an error message from lower protocol layers, and in particular the physical layer of the link. The detection means can be implemented in the bridge as a program with code sections that monitor messages received, or implemented in dedicated hardware. In use, the detection of a link failure through the detection means is immediately followed by the above described procedure involving the X BPDU. The advantage with the detection means is that the detection is almost immediate, as relied is on a message indicating the actual failure and not the expiry of a Max Age timer. Practically this means that the detection is made typically within 50 milliseconds, whereas the standard Max Age expiry detection takes 20 seconds.

Although the detection of the failure by using a error message from the physical layer significantly reduces the convergence time, the invention can also be used with the normal, i.e. Max Age expiry detection for link failure as described above in case of bridge failure. If for some reason a link failure does not give rise to an error message that is picked up by the respective bridge, the failure still will be detected as the Max Age timer will time out and the topology will be resolved as described above in the case of a bridge failure.

Preferably, BPDUs are given priority in transmission through the network over regular data frames. This can be implemented for example by giving a higher Quality of Service (QoS) to BPDU than to regular data frames. As transmission of the BPDUs has very little delay, BPDUs can travel through the network fast, also helped by the fact that no time consuming collisions can occur. As a result the process of network restoration, i.e. the convergence to a new topology after failure is accelerated. Also the Max Age timer can be set lower, as the risk of BPDUs being dropped is significantly reduced. As a result bridge failures can be detected sooner.

Preferably, the bridges connect via point-to-point links, for example SDH or SONET links. This has as advantage that the bridges do not have to contend for the medium as no host directly connect to the link. This results in that no delays occur due to, binary back off mechanism or non pre-emptive service of packets on the LAN segment, and, if the point-to-point links are implemented in a layer below the bridges, collisions. In such an environment with point-to-point links the above mentioned higher QoS of the BPDUs can be advantageously implemented. The invention can also be used with other point-to-point links, such as virtual links like tunnels in a Virtual Private Network.

A data communication network component according to the invention comprises a port section with one or more ports for the input and output of data, a processor section comprising a microprocessor and a memory in which the operating program of the network component is stored, a switching section for switching data flows between the input and output ports, a buffer section comprising a memory for temporarily storing data, and optionally a look up table section, comprising a memory for storing addresses, like for example MAC addresses. Examples of network components are a network switch, a layer 3 switch and a router. A data communication network component according to the invention may further comprise detection means for detecting physical layer error messages.

A data communication network according to the invention, comprises at least one data communication network component according to the invention

## Claims

1. Method for determining a spanning tree topology, comprising the steps of
detecting network failure (200),
resolving update of topology (400), **characterized by**
the flushing of a MAC table in a network component (B1, B2) in reaction of detection of network failure.

2. Method according to claim 1, further comprising
the flushing of data frames in a buffer of the network component (B1, B2) in reaction of detection of network failure.

3. Method according to claim 1 or 2, wherein the detection of the network failure comprises the expiry of a time limit (Max Age timer) in the network component (B1, B2).

4. Method according to claim 1 or 2, wherein the detection of the network failure comprises receiving by the network component (B1, B2) of an error detection message from the physical layer of the network.

5. Method according to claim 4, comprising
composition by the network component (B1, B2) of an error identification message (X BPDU) after receipt of the error message from the physical layer,
propagation of the error identification message to the nearest network components of the network component (B1, B2).

6. Method according to claim 5, comprising
in reaction of receipt of the error identification message (X BPDU) by a network component flushing a MAC table of the respective network component.

7. Method according to claim 5 or 6, comprising:
in reaction of receipt of the error identification message (X BPDU) by a network component flushing data frames in a buffer of the respective network component, and forwarding said identification message.

8. Method according any of claim 5-7, wherein said error identification message (X BPDU) is composed in the format of a BPDU.

9. Method according to any of the preceding claims, wherein BPDUs are given a higher QoS than regular data frames.

10. Data communication network component, in particular a bridge, provided with means for flushing a MAC table or data buffer of the network component in reaction of detection of network failure.

## Amended claims

### Amended claims in accordance with Rule 86(2) EPC.

1. Method for determining a spanning tree topology, comprising the steps of
detecting network failure (200),
resolving update of topology (400), **characterized by**
the flushing of a MAC table in a network component (B1, B2) in reaction to detection of network failure, wherein the detection of the network failure comprises receiving by the network component (B1, B2) of an error detection message from the physical layer of the network.

2. Method according to claim 1, further comprising
the flushing of data frames in a buffer of the network component (B1, B2) in reaction to detection of network failure.

3. Method according to claim 1 or 2, wherein the detection of the network failure comprises the expiry of a time limit (Max Age timer) in the network component (B1, B2).

4. Method according to any of claims 1 to 3, comprising
composition by the network component (B1, B2) of an error identification message (X BPDU) after receipt of the error detection message from the physical layer, and
propagation of the error identification message to the nearest network components of the network component (B1, B2).

5. Method according to claim 4, comprising
in reaction to receipt of the error identification message (X BPDU) by a network component, flushing a MAC table of the respective network component.

6. Method according to claim 4 or 5, comprising:
in reaction of receipt of the error identification message (X BPDU) by a network component flushing data frames in a buffer of the respective network component, and forwarding said identification message.

7. Method according to any of claims 4 to 6 wherein said error identification message (X BPDU) is composed in the format of a BPDU.

8. Method according to any of the preceding claims, wherein BPDUs are given a higher QoS than regular data frames.

9. Data communication network component, in particular a bridge, provided with means for flushing a MAC table or data buffer of the network component in reaction of detection of network failure.
